(19) Europäisches Patentamt
European Patent Office
Office européen des brevets

(11) EP 4 685 176 A1

(12) **EUROPEAN PATENT APPLICATION**

(43) Date of publication:
**28.01.2026 Bulletin 2026/05**

(21) Application number: **24190549.6**

(22) Date of filing: **24.07.2024**

(51) International Patent Classification (IPC):
***C08J 9/02*** *(2006.01)* ***C08J 9/08*** *(2006.01)*
***C08G 73/02*** *(2006.01)*

(52) Cooperative Patent Classification (CPC):
**C08J 9/08; C08G 73/02; C08J 9/02;**
C08J 2201/026; C08J 2203/02; C08J 2379/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Henkel AG & Co. KGaA**
**40589 Düsseldorf (DE)**

(72) Inventors:
- **Seggewiss, Patrick**
**40595 Düsseldorf (DE)**
- **Hartmann, Olaf**
**40629 Düsseldorf (DE)**
- **Díaz Gutiérrez, Jordán**
**40223 Düsseldorf (DE)**
- **Ezau, Philip**
**42719 Solingen (DE)**

(54) **2-COMPONENT FOAMS BASED ON ACETYLACETONATE AND AMINES**

(57) The present invention relates to a foamable composition based on multifunctional acetoacetate compound, and to its use in structural foam applications. In particular, the present invention relates to a foamable composition based on a multifunctional acetoacetate compound, a polyether polyamine, a monofunctional primary amine and a chemical blowing agent.

EP 4 685 176 A1

## Description

Technical field

The present invention relates to a foamable composition based on multifunctional acetoacetate compound, and to its use in structural foam applications. In particular, the present invention relates to a foamable composition based on a multifunctional acetoacetate compound, a polyether polyamine, a monofunctional primary amine and a chemical blowing agent.

Background

Light-weight components for mass production of constant dimensions with high rigidity and structural strength are required for many fields of application. In particular in vehicle construction, because of the weight saving desired there, there is a high demand for lightweight components made of thin-walled structures which nevertheless have sufficient rigidity and structural strength. One way of achieving high rigidity and structural strength with the lowest possible weight of the component uses hollow parts which are produced from relatively thin sheet metal or plastic plates. Thin-walled sheets, however, tend to undergo slight deformation. It has therefore been known for some time in hollow body structures to foam this cavity with a structural foam, as a result of which, on the one hand, deformation is prevented or minimized and, on the other hand, the strength and rigidity of these parts are increased.

Such structural foams are usually composed of polyurethane resins or epoxy resins, and thus are limited by the underlying chemistry or using toxic or harmful raw materials, such as isocyanates.

Structural foams based on alternative chemistry such as multifunctional acetoacetate compounds have been developed.

US 20080132596 A discloses a foam comprising the reaction product of one or more multifunctional acrylates with one or more multifunctional aceto- or cyano-acetate compounds in the presence of a base and a physical blowing agent.

EP 3154929 B1 discloses a method of preparing a foam, comprising reacting a multifunctional acetoacetate ester with a multifunctional amine in the presence of a blowing agent such as water or blowing agent having low boiling points which are vaporized during the exothermic polymerization reaction.

While such methods provide the means to create structural foams based on acetoacetate/acrylate chemistry, it requires a minimum amount of exothermicity to evaporate the blowing agents. It is thus not possible to create structural foams with slow-curing formulations. In addition, shrinkage of the foams may occur when the heated foams cool to room temperature.

It is therefore an object of the present invention to provide a multifunctional acetoacetate based foamable composition to overcome the above disadvantages.

Summary of the invention

This object is solved by a foamable composition based on multifunctional acetoacetate compound, which is able to foam and cure at room temperature, and provides to the foam product good density, volume increase and easiness to adjust pot life and toughness.

In one aspect, the present invention relates to a foamable composition, comprising:

a multifunctional acetoacetate compound,
a polyether polyamine,
a monofunctional primary amine, and
a chemical blowing agent,

wherein the molar equivalent ratio of the monofunctional primary amine to the multifunctional acetoacetate compound is no more than 0.35.

In another aspect, the present invention relates to a two-part foamable composition, comprising,

a first part comprising a multifunctional acetoacetate compound and a chemical blowing agent, and
a second part comprising a polyether polyamine and a monofunctional primary amine,

wherein the molar equivalent ratio of the monofunctional primary amine to the multifunctional acetoacetate compound is no more than 0.35.

In yet another aspect, the present invention relates to the foam product obtained by reacting the foamable

composition according to the present invention.

In yet another aspect, the present invention relates to the use of the foamable composition or the foam product according to the present invention as structural foam or in sealing and insulation applications.

Further preferred embodiments of the invention are set out in the claims.

Detailed description of the invention

In the present specification, the terms "a" and "an" and "at least one" are the same as the term "one or more" and can be employed interchangeably.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

If reference is made herein to a molecular weight of a polymer or its components, this reference refers to the average number molecular weight $M_n$, if not explicitly stated otherwise. The number average molecular weight $M_n$ can be determined by gel permeation chromatography with THF as the eluent. If not stated otherwise, all given molecular weights are those determined by end group analysis. The weight average molecular weight $M_w$ can be determined by GPC, as described for $M_n$.

All percentages given herein in relation to the compositions or formulations relate to weight % relative to the total weight of the respective composition or formula, if not explicitly stated otherwise.

According to the present invention, the foamable composition comprises a multifunctional acetoacetate compound, a polyether polyamine, a monofunctional primary amine, and a chemical blowing agent, wherein the molar equivalent ratio of the monofunctional primary amine to the multifunctional acetoacetate compound is no more than 0.35.

The inventors have surprisingly found that the foamable composition is able to cure and foam at room temperature (i.e. 25 °C) with excellent foaming properties such as density and volume increase ratio and easiness to adjust pot life and toughness, and thus is suitable for being applied as structural foam in various applications.

<u>Multifunctional acetoacetate compound</u>

According to the present invention, the multifunctional acetoacetate compound may have at least two acetoacetoxy groups, preferably 2 to 10 acetoacetoxy groups, and more preferably 2 to 4 acetoacetate groups. As such, this component may comprise either a single compound having at least two acetoacetoxy groups or a mixture of two or more compounds each having at least two acetoacetoxy groups. Each said compound should desirably be characterized by a number average molecular weight (Mn) of less than 12000 g/mol, for example less than 10000 g/mol or less than 6000 g/mol.

In a preferred embodiment, the foamable composition comprises at least one acetoacetylated polyol, said acetoacetylated polyol being obtainable in accordance with the following equation (Reaction 1):

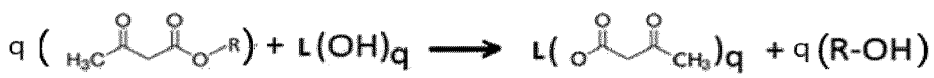

(1)

wherein:

R is a $C_1$-$C_{12}$ alkyl group;
L denotes the backbone structure of the polyol; and,
$q \geq 2$.

Reaction 1 above may be described as the transesterification or more specifically the transacetylation of a polyol with an acetoacetate compound as defined in Formula (I) below:

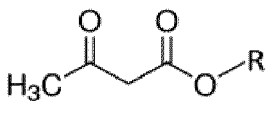

**Formula (I)**

wherein R is said $C_1$-$C_{12}$ alkyl group. More typically, the constituent alkyl group R has from 1 to 8 and, preferably, from 1 to 6 carbon atoms. Exemplary alkyl acetoacetates include: t-butyl acetoacetate; isobutyl acetoacetate; n-butyl acetoacetate;

isopropyl acetoacetate; n-propyl acetoacetate; ethyl acetoacetate; and, methyl acetoacetate. t-Butyl acetoacetate is preferred herein.

The polyol of Reaction 1 above is denoted by Formula (II) herein below:

$$L\text{-}(OH)_q \qquad (II)$$

wherein $q \geq 2$ and L denotes the backbone structure. Such polyols (II) may optionally include heteroatoms in their backbone or in pendent side chains. Further, the polyol (II) may be a monomeric polyhydric alcohol or may possess an oligomeric or polymeric backbone. Irrespective of this, it is preferred that the polyol (II) has a number average molecular weight (Mn) of less than 12000 g/mol; and, a hydroxyl functionality, q, of from 2 to 10, preferably from 2 to 4.

In one embodiment, the foamable composition comprises an acetoacetylated polyol obtained from a monomeric polyhydric alcohol. Examples of suitable monomeric polyhydric alcohols include but are not limited to: 1,2-butanediol; 1,3-butanediol; 1,4-butanediol; 2,3-butanediol; 2,4-pentanediol; butyl ethyl propane diol; 1,4-hexanediol; 1,4-cyclohexane dimethanol; pentaerythritol; dipentaerythritol; trimethylolethane; trimethylolpropane; ditrimethylolpropane; tricyclodecane dimethanol; hydroquinone bis(2-hydroxyethyl) ether; alkylene glycols, such as ethylene glycol, diethylene glycol, propylene glycol, dipropylene glycol, butylene glycol, pentamethylene glycol, hexamethylene glycol, hexylene glycol and neopentyl glycol; glycerol; castor oil; castor wax; sugars such as glucose, sucrose, fructose, raffinose, maltodextrose, galactose, xylose, maltose, lactose, mannose and erythrose; sugar alcohols such as erythritol, xylitol, malitol, mannitol and sorbitol; and, hydroxyalkylated aliphatic diamines such as o,o'-bis(diethanolaminomethyl)-p-nonylphenol, N,N,N,N'-tetra(2-hydroxypropyl)ethylenediamine (Quadrol L, available from BASF) and N,N,N,N-tetra(2-hydroxyethyl)ethylenediamine. In a preferred embodiment, the multifunctional acetoacetate compound is an acetoacetylated polyol obtained from glycerol, trimethylolpropane, ethanol isosorbide, neopentylglycol, pentaerythritol, dimethylolpropane, dipentaerythritol, propoxylated monosaccharides, trimethylol ethane, and a combination thereof.

The present invention also does not preclude such multifunctional acetoacetate compound from comprising an acetoacetylated polyol obtained from an oligomeric or polymeric polyhydric alcohol. In particular, the polyol (II) may be selected from the group consisting of: polyoxyalkylene polyols, also called polyether polyols; polyester polyols, including polycaprolactone polyols; polyesteramide polyols; polycarbonate polyols; polybutadiene polyols; polyurethane polyols; polyacrylate polyols; and, combinations thereof. Desirably such oligomeric or polymeric polyols should be characterized by: a number average molecular weight (Mn) of at most 10000 g/mol and preferably from 250 to 6000 g/mol. Further, the use of one or more polyether polyols or polyester polyols as the starting material is of particular interest. And a commercial example of a polyether polyol is Voranol CP260 (available from Dow).

As is known in the art, polyester polyols can be prepared from condensation reactions of polybasic carboxylic acids or anhydrides and a stoichiometric excess of polyhydric alcohols, or from a mixture of polybasic carboxylic acids, monobasic carboxylic acids and polyhydric alcohols. Suitable polybasic carboxylic acids and anhydrides for use in preparing the polyester polyols include those having from 2 to 18 carbon atoms and in particular those having from 2 to 10 carbon atoms. Nonlimiting examples of such polybasic carboxylic acids and anhydrides include: adipic acid; glutaric acid; succinic acid; malonic acid; pimelic acid; sebacic acid; suberic acid; azelaic acid; 1,4-cyclohexane dicarboxylic acid; phthalic acid; phthalic anhydride; isophthalic acid; terephthalic acid; tetrahydrophthalic acid; hexahydrophthalic acid; and, combinations thereof. Monobasic carboxylic acids which can be used include those having from 1 to 18 carbon atoms or, preferably from 1 to 10 carbon atoms, of which the following examples might be mentioned: formic acid; acetic acid; propionic acid; butyric acid; valeric acid; caproic acid; caprylic acid; capric acid; lauric acid; myristic acid; palmitic acid; stearic acid; and, combinations thereof. Suitable polyhydric alcohols have from 2 to 18 carbon atoms and desirably from 2 to 10 carbon atoms. Exemplary polyhydric alcohols include, but are not limited to: ethylene glycol; propylene glycol; hexane-1,6-diol; trimethylol propane; glycerol; neopentyl glycol; pentaerythritol; butylene glycol; 2-methyl-1,3-propane diol; hexylene glycol; and combinations thereof.

Polyether polyols may be produced by processes known in the art, such as the reaction of alkene oxides with polyhydric starter molecule in the presence of an appropriate catalyst, such as an alkali metal hydroxide, alkali metal alkoxide or antimony pentachloride. Examples of the alkene oxides include: tetrahydrofuran; ethylene oxide; 1,2-propylene oxide; 1,2- and 2,3-butylene oxide; and, styrene oxide. And examples of suitable starter molecules include but are not limited to: water; ethylene glycol; 1,2- and 1,3-propanediols; 1,4-butanediol; diethylene glycol; and, trimethylolpropane. Preferred polyether polyols for use herein are: polypropylene oxide) polyol; polyethylene oxide) polyol; PTMEG; and mixtures thereof.

Polycarbonate polyols for use herein can be selected from, but are not limited to polycarbonate diols. Such polycarbonate diols may be produced by the reaction of a diol with dialkyl or diaryl carbonates or phosgene. The reactant diols may be selected from, but are not limited to: 1,2-propanediol; 1,3-propanediol; 1,4-butanediol; 1,5-pentanediol; 1,6-hexanediol; diethylene glycol; trioxyethylene glycol; and, mixtures thereof. An exemplary diaryl carbonate is diphenyl carbonate.

The transesterification (transacetylation) Reaction 1 may be conducted by conventional methods as known in the

art of polymer chemistry. Reference in this regard may be made to *inter alia*: Witzman et al. "Comparison of Methods for the Preparation of Acetoacetylated Coating Resins", Journal of Coatings Technology, Vol. 62, No. 789, October 1990; and, Witzeman et al. "Transacetoacetylation with tert-butyl acetoacetate: Synthetic Applications", J. Org. Chemistry 1991, 56, 1713-1718. Typically, the reaction between the oligomeric or polymeric polyol and the acetoacetate will involve mixing said polyol and acetoacetate in a suitable vessel, either with or without solvent, at an elevated temperature of, for example, from 50°C to 200°C or from 80°C to 150°C; preferably, the reaction is performed in the absence of solvent. The reaction is driven towards completion by distilling off the alcohol (R-OH) formed under reduced pressure. Moreover, the reaction can be conducted in the presence of a catalytic amount of a transesterification catalyst of which suitable examples include, but are not limited to, calcium acetate, zinc acetate, bismuth acetate, lead oxide and trichloroacetic acid.

Whilst the product of the above described transacetylation reaction may be used directly in the present foamable composition, that reaction product may equally be first isolated and purified using methods known in the art. Mention in this regard may be extraction, evaporation, distillation and chromatography as suitable techniques.

In the present invention, the multifunctional acetoacetate compound at least reacts with the polyether polyamine and/or monofunctional primary amine during curing reaction while the cured product foams with gas such as carbon dioxide in-situ generated by the foaming reaction of the chemical blowing agents or in combination with monofunctional primary amine, in particular under room temperature.

In one embodiment, the multifunctional acetoacetate compound is present in the foamable composition in an amount of 0.5% to 70% by weight, preferably 1% to 60%, and more preferably from 10% to 50% by weight based on the weight of the foamable composition.

Polyether polyamine

According to the present invention, the foamable composition also comprises a polyether polyamine. The polyether polyamine refers to a polyamine only having polyether (oxyalkylene) units in the backbone structure.

In one preferred embodiment, the polyether polyamine has oxyalkylene unit selected from oxyethylene, oxypropylene, oxytetramethylene and combination thereof. Preferably, the polyether polyamine has oxypropylene units, and more preferably are polyoxypropylene diamine, polyoxypropylene triamine, polyoxypropylene polyoxyethylene diamine, polyoxypropylene polyoxyethylene triamine, polyoxypropylene polyoxytetramethylene diamine, or polyoxypropylene polyoxytetramethylene triamine. In one particular embodiment, the polyether polyamine is polyoxypropylene diamine and/or polyoxypropylene triamine.

Examples of the polyoxypropylene diamine are those represented by Formula (3),

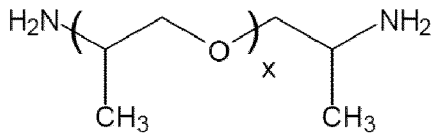

(3),

wherein x is from 2 to 100, preferably from 2 to 80.

Preferably, the polyoxypropylene diamine has a number averaged molecular weight of from 100 to 5,000 g/mol, and more preferably from 200 to 4,000 g/mol. In view of improving the volume increase of the foam, the polyoxypropylene diamine has a number averaged molecular weight of from 500 to 4,000 g/mol is preferred.

Such polyoxypropylene diamines are commercially available as Jeffamine D series polyether polyamines such as D-230, D-400, D-2000 and D-4000 from Huntsmann.

Examples of the polyoxypropylene triamine are those represented by Formula (4),

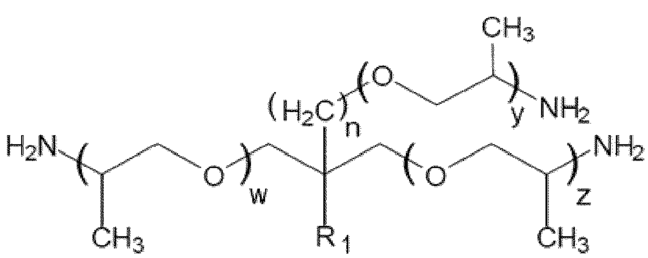

(4)

wherein n is from 0 to 6, w, y and z are each independently from 1 to 100, and more preferably from 1 to 80, the sum of w, y and z is from 3 to 100, and preferably from 5 to 85, $R_1$ is hydrogen or a linear or branched $C_1$ to $C_{16}$ alkyl group, and

preferably is hydrogen or a linear or branched $C_1$ to $C_8$ alkyl group.

Preferably, the polyoxypropylene triamine has a number averaged molecular weight of from 100 to 8,000 g/mol, and more preferably from 200 to 6,000 g/mol.

Such polyoxypropylene triamines are commercially available as Jeffamine T series polyether polyamines such as T-403, T-3000 and T-5000 from Huntsmann.

Examples of the polyoxypropylene polyoxyethylene diamines can be represented by the Formula (5)

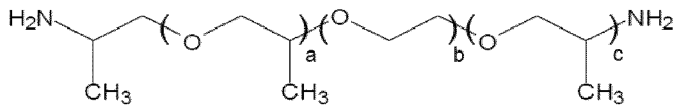

(5)

wherein a is from 0 to 10, b is from 2 to 60, c is from 0 to 10, and sum of a and c is from 2 to 20.

Preferably, such polyoxypropylene polyoxyethylene diamine has a number averaged molecular weight of from 100 to 5,000, and more preferably from 200 to 3,000.

Such polyoxypropylene polyxoyethylene diamines are commercially available as Jeffamine ED series polyether polyamines such as ED-600, ED-900 and ED-2003 from Huntsmann.

In another embodiment, the polyoxyalkylene polyamine has oxypropylene units and oxytetramethylene units in the backbone structure.

Preferably, such polyoxypropylene polytetramethylene polyamine has a number averaged molecular weight of from 100 to 3,000, and more preferably from 200 to 2,000.

Such polyoxypropylene polytetramethylene polyamine are commercially available as Jeffamine THF series polyether polyamines such as THF-100, THF-140 and THF-170 from Huntsmann.

In one preferred embodiment, the polyether polyamine are polyoxypropylene triamines only or polyoxypropylene triamines in combination with a polyoxypropylene diamine, preferably having a number averaged molecular weight of from 500 to 4,000 g/mol.

In one embodiment, the polyether polyamine is present in the foamable composition in an amount of 5% to 80% by weight, preferably 10% to 60% by weight based on the weight of the foamable composition.

Monofunctional primary amine

The foamable composition of the invention also comprises a monofunctional primary amine. The monofunctional primary amine firstly acts as a foaming modifier in the composition. On the other hand, part of the monofunctional primary amine in the composition may also react with the blowing agent, e.g. N-carboxyanhydrides and in-situ releases carbon dioxide under room temperature. Overall, the molar equivalent ratio of the monofunctional primary amine to the multifunctional acetoacetate compound is no more than 0.35, preferably from 0.05 to 0.3. If the molar equivalent ratio is within the above range, the toughness and/or shrinkage of the foam product can be improved.

The monofunctional primary amine may be a monofunctional primary aliphatic amine, a monofunctional primary aromatic amine or the combination.

Examples of the monofunctional primary aliphatic amine are alkylamine having 1 to 16 carbon atoms, preferably 1 to 6 carbon atoms, such as methylamine, ethylamine, propylamine, butylamine, pentylamine, hexylamine, heptylamine, isopropylamine, isobutylamine, t-butylamine, 2-pentylamine, neopentylamine.

Examples of the monofunctional primary aromatic amine are arylamine having 6 to 20 carbon atoms, such as phenylamine, naphthylamine, biphenylamine, anthracenylamine, 3-methyl-phenylamine, 4-methyl-naphthylamine, 2-methyl-biphenylamine, 9-methyl-anthracenylamine, phenylmethylamine, phenylethylamine, phenylpropylamine, phenylbutylamine, naphthylmethylamine, naphthylethylamine, biphenylmethylamine, 3-methyl-phenylmethylamine, phenylisopropylamine, naphthylisopropylamine, naphthylisobutylamine, biphenylisopropylamine and more preferably is phenylethylamine.

Such monofunctional primary amine is present in amount of no more than 10% by weight, preferably from 0.5 to 10% by weight based on the weight of the foamable composition.

Chemical blowing agent

The present foamable composition also contains one or more chemical blowing agents. "Chemical blowing agent" means one or more blowing agents able to undergo chemical reaction in combination of the blowing agents or with other component(s) such as monofunctional primary amine in the composition, and release gas such as carbon dioxide as the reaction product especially under room temperature (i.e. 25 °C) so as to foam the cured product at the same time.

The chemical blowing agent(s) may be organic acids, organic acid anhydrides, alkali metal bicarbonates, or combination thereof. In one preferred embodiment, the chemical blowing agents are the combination of organic acids and alkali metal bicarbonates. Such foaming reaction releases gas, such as carbon dioxide in situ under room temperature. In another preferred embodiment, the chemical blowing agent is organic acid anhydrides able to react with the monofunctional primary amine in the composition and release gas, such as carbon dioxide in situ under room temperature.

Examples of organic acids are monocarboxylic acids such as formic acid, acetic acid, propionic acid, butyric acid, valeric acid, hexanoic acid, heptanoic acid, caprylic acid, nonanoic acid, decanoic acid, undecylenic acid, lauric acid, tridecylic acid, myristic acid, pentadecanoic acid, palmitic acid, phenylacetic acid, 2-phenylpropionic acid, triphenylacetic acid, mandelic acid, hydrocinnamic acid, o-, p-, m-tolylacetic acid, 4-hydroxyvphenyl acetic acid, benzoic acid, toluic acid, dimethylbenzoic acid, dichlorophenylacetic acid, naphthoic acid, salicylic acid, anhydride thereof, and preferably is acetic acid.

Examples of alkali metal bicarbonates are sodium bicarbonate, potassium bicarbonate, calcium bicarbonate, and preferably is sodium bicarbonate.

Examples of the organic anhydrides are N-carboxyanhydrides of ortho-amino aromatic carboxylic acid and N-carboxyanhydrides of amino acid, and more preferably is isatoic anhydride. The organic anhydride may convert to organic acid in water separately contained in the foamable composition and then the organic acid reacts with other blowing agent(s) such as alkali metal bicarbonates to foam the cured product with generated carbon dioxide. The organic anhydride may present in the composition as single chemical blowing agent. In such case, the organic anhydride may react with the monofunctional primary amine and the reaction release gas such as carbon dioxide to foam the cured product in-situ in particular under room temperature.

The isatoic anhydride may be represented in Formula (6)

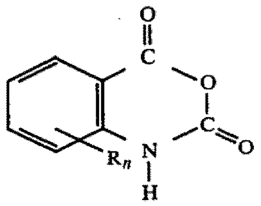

(6)

wherein R is selected from the group consisting of hydrogen, alkyl, nitro, halo, hydroxy and cyano, and n is a number of 1 to 4. In one preferred embodiment, R is hydrogen and n is 4 in the compound.

The N-carboxyanhydrides of amino acid may be represented in Formula (7)

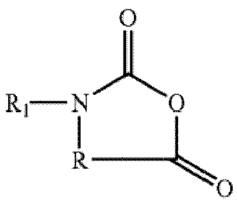

(7)

wherein R represents the main radical of the α-, β- or γ-amino acid and R' represents a hydrogen atom or the radical of the secondary amino group of the amino acid, it being possible for R' to form a ring with R.

Examples of such N-carboxyanhydride include sarcosine N-carboxyanhydride, threonine N-car boxyanhydride, serine N-carboxyanhydride, valine N-carboxyanhydride, norvaline N-carboxyanhydride, isoleucine N-carboxyanhydride, leucine N-carboxyanhydride, norleucine N-carboxyanhydride, lysine N-carboxyanhydride, phenylalanine N-carboxyanhydride, and tyrosine N-carboxyanhydride.

Such chemical blowing agent is present in amount of no more than 30% by weight, preferably from 1 to 20% by weight of the weight of the foamable composition.

Amine curing promoter

Optionally, the foamable composition comprises at least one amine curing promoter to improve the curing performance of the acetoacetate based polymer. The amine curing promoter may have from 1 to 10, for example from 2 to 6 or from 2 to 4 primary and/or secondary amino groups in accordance with Formula (8) herein below:

$R^2R^3NH$ Formula (8)

wherein:

$R^2$ is hydrogen or a $C_1$-$C_6$ alkyl group; and,

$R^3$ is a hydrocarbyl group having up to 36 carbon atoms which contains aromatic groups, which hydrocarbyl group is optionally substituted by one or more -$NHR^2$ groups and is further optionally interrupted by one or more O atoms and / or by one or more -N($R^4$)- groups of which $R^4$ is a hydrogen atom; or,

$R^3$ is a $C_1$-$C_{36}$ aliphatic group which is optionally substituted by one or more -$NHR^2$ groups and which is further optionally interrupted by one or more O atoms and / or by one or more -N($R^4$)- groups of which $R^4$ is a hydrogen atom; and,

$R^2$ and $R^3$ may form a ring together with the N-atom to which they are bound.

For completeness, where $R^2$ and $R^3$ form a ring, it will be recognized that such a ring may be heterocyclic and that it may include one or more nitrogen atoms.

The reactant amine according to Formula (8) may be characterized in that: $R^2$ is hydrogen; and, $R^3$ is a $C_1$ to $C_{36}$ alkyl group preferably a $C_1$ to $C_{12}$ alkyl group which is optionally substituted with at least one -$NHR^2$ group and which is optionally interrupted by one or more -N($R^4$)- groups of which $R^4$ is a hydrogen atom. Exemplary di-primary amines of this embodiment include: tetramethylene diamine; pentamethylene diamine; hexamethylene diamine; octamethylene diamine; and, dodecamethylene diamine. Exemplary primary-secondary diamines of this embodiment include: N-methylethylenediamine; N-ethylethylenediamine; N-methyl-1,3-diaminopropane; 2-(isopropylamino)ethylamine; N-propylethylenediamine; N-propyl-1,3-propanediamine; N-cyclohexyl-1,3-propanediamine; 4-(aminomethyl)piperidine; 3-(aminomethyl)piperidine; 2-(aminomethyl)piperidine; and, 4-aminopiperidine.

Further exemplary commercial amines for use in the present invention include but are not limited to: 2-methyl-1,5-diaminopentane available as Dytek A from Invista Arpadis; 1,2-diaminocyclohexane, available as a mixture of isomers as Dytek DCH-99 from Invista Arpadis; N,N'-dimethyl hexanediamine (MAHMA) available from Sigma-Aldrich; fatty acid dimer based diamines available as Priamine 1071, 1073, 1074 and 1075 from Croda; phenalkamines available as Cardolite NX-5608, NX-5607 and LITE 3060 available from Cardolite Corporation; polyethyleneimines (PEI) available under the trade names Lupasol G 20 (waterfree) and Lupasol FG from BASF, and isophorone diamine from Sigma-Aldrich.

And still further exemplary amines suitable for use in composition of the present invention include: piperidine and pyrrolidine.

In certain circumstances it may be beneficial for the amine curing promoter to include a primary amine according to Formula (III) which is characterized in that $R^2$ is hydrogen and $R^3$ is a $C_1$ to $C_{12}$ alkyl group, preferably a $C_1$ to $C_6$ alkyl group. Exemplary amines of this type include: n-butylamine; n-hexylamine; n-octylamine; n-decylamine; and, n-dodecylamine.

In one preferred embodiment, the amine curing promoter is a cycloaliphatic diamine, preferably selected from isophorone diamine, menthane diamine, 1,2-diaminocyclohexane, 1,3-diaminocyclohexane, 1,4-diaminocyclohexane, 1,3-di(aminomethyl)cyclohexane, 4,4'-methylene dicyclohexylamine, 4,4'-diaminodicyclohexylmethane, 3,3'-dimethyl-4,4'-diaminodicyclohexylmethane, and combinations thereof.

If present, the molar equivalent ratio of the amine groups in the amine curing promoter to the amine groups in the polyether polyamines ranges from 1:10 to 10:1, preferably from 1:5 to 5:1, and more preferably from 1:3 to 3:1.

## Solvent

The foamable composition optionally comprise a solvent such as water.

The solvent is present in the composition in an amount of 0 to 10% by weight, and preferably from 0.5% to 5% by weight of the composition.

## Filler

The foamable composition may comprise at least one filler, preferably selected from aluminum oxide, aluminum hydroxide, aluminum silicate, calcium silicate, magnesium silicate, calcium carbonate, barium sulfate, calcium sulfate, glass fibers, carbon black, silica and combination thereof. In one embodiment, the filler is selected from aluminum oxide, aluminum hydroxide, calcium carbonate, silica and combination thereof.

The filler may have an average particle diameter D50 from 0.1 $\mu$m to 150 $\mu$m, preferably from 0.5 $\mu$m to 120 $\mu$m. The filler can be used in single or in mixture of two or more materials having different particle sizes.

In the present invention, there are no particular restrictions on the shape of the filler. The shape may be a regular or irregular shape and includes but is not limited to polygon, cube, oval, sphere, needle, flake, plate or any combination thereof. Preferably, the fillers are in a spherical shape. The filler may be surface-modified or non-surface modified.

Examples of commercially available aluminium oxides include, for example, AX1 M from NIPPON STEEL Chemical & Material Co., Ltd.; NASR-05 from Bestry Performance Materials Co., Ltd.; DAW-01 from Denka Corporation. BAK 10 from Bestry Performance Materials Co., Ltd.; BA 7 from Bestry Performance Materials Co., Ltd.; BAK 5 from Bestry Performance Materials Co., Ltd.

Examples of commercially available aluminium hydroxides include, for example Martinal series products from Huber Advanced Materials.

Examples of commercially available silicas include fumed silicas such as AEROSIL R 202 from Evonik.

The filler is present in an amount from 0 or 0.5% to 30% by weight, preferably from 1% to 20% by weight based on the weight of the foamable composition.

Additives

The composition according to the invention may further comprise additives. The additives are preferably selected such that they do not enter into a reaction or a side reaction with the acetoacetates and amines, at least not during the period of the cross-linking and foaming reactions. Preferably, the one or more additives are selected from the group consisting of at least one additive selected from plasticizer, catalyst, pigments, co-blowing agents, cell stabilizers, preservatives, antioxidants, reinforcing agents, antistatic agents, and combination thereof. In preferred embodiments the amount of the additives presents in the foamable composition is from 0 to 10 wt%, preferably from 0.1 to 5 wt%, based on the total weight of the foamable composition.

In certain embodiments, plasticizers may be included to moderate the softness and flexibility of the foam product. One or more plasticizers may in this case be selected from the group consisting of: vegetable oil; mineral oil; soybean oil; terpene resins; aromatic esters such as dioctyl phthalate, diundecyl phthalate, tricresyl phosphate and triisononyl mellitate; linear esters such as di-tridecyl adipate; chlorinated paraffin; aromatic and napthenic process oils; alkyl naphthalenes; and, low molecular weight polyisoprene, polybutadiene, mono-functional and long chain containing amines or polybutylene resins. Conventionally, the amount of plasticizer should be from 0 to 20 wt.%, preferably from 0 to 10 wt.% or from 0 to 5 wt.% based on the total weight of the composition.

The curing reaction of the composition can be catalyzed. Known catalysts include, for instance, stannous octoate, stannous dioleate, stannous palmitate, stannous oxalate, boron trifluoride etherate and Broensted acids. And, where used, the amount of catalyst - as determined in the absence of any applicable support - should be from 0.001 to 5 %, preferably from 0.01 to 2 % by weight, based on the total weight of reactant amine used. However, it is highly preferred that the present composition is free of catalysts.

Flame retardants may be added in the adhesive composition according to the present invention to improve the performance of the cured product. Examples of the flame retardants are ammonium polyphosphate, triphenylphosphine oxide, aluminum triethyl phosphinate, zinc diethyl phosphinate, melamine cyanurate, melamine phosphate, melamine polyphosphate, melamine pyrophosphate, melamine ammonium polyphosphate, melamine ammonium pyrophosphate, melamine borate, triphenyl phosphate, resorcinol bis-(diphenyl phosphate), bisphenol A-bis-(diphenyl phosphate), resorcinal-bis-(2.6-dixylylenylphosphate), aluminum hydroxide, aluminum hydroxide, magnesium dihydroxide, zinc oxide, molybdenum trioxide, antimony oxide, aluminum trihydroxide, zinc borate, calcium silicate, magnesium silicate, calcium sulfate, magnesium carbonate, dihydroxaphosphaphenantren, dihydroxaphosphaphenantren-hydroquinone, potassium diphenyl sulphone sulphonate, poly methyl phenyl siloxane, potassium-butyl perfluoro sulfonate and mixtures thereof. The flame retardants are preferably used in the composition in amounts between 0.1 and 10% by weight, preferably between 0.5 and 5% by weight.

Any cell stabilizer conventionally used in the manufacture of structural foams can be used. Mention may be made, for example, of siloxane polyether copolymers. In practice, the amount of cell stabilizer used generally varies from approximately 0.05 to 10% by weight, and preferably 0.1 to 5% by weight of the composition.

In a preferred embodiment, the present invention relates to a foamable composition, comprising:

from 0.5% to 70% by weight of a multifunctional acetoacetate compound,
from 5% to 80% by weight of a polyether polyamine,
from 0.5 to 10% by weight of a monofunctional primary amine, and
from 1 to 30% by weight of a chemical blowing agent,

wherein the molar equivalent ratio of the monofunctional primary amine to the multifunctional acetoacetate compound is no more than 0.35.

In another aspect, it is directed to a two-part foamable composition, comprising,

a first part comprising a multifunctional acetoacetate compound and a chemical blowing agent, and
a second part comprising a polyether polyamine and a monofunctional primary amine, wherein the molar equivalent

ratio of the monofunctional primary amine to the multifunctional acetoacetate compound is no more than 0.35.

In one preferred embodiment, the second part comprises no chemical blowing agent. In another preferred embodiment, the second part comprises a second chemical blowing agent.

The ingredient(s) in each part is stored in a container (part) separate from the other until the contents of all the containers are mixed together to form the mixture of the foamable composition prior to the application. Upon applying and curing/foaming, a solid foam material forms in the application area.

The foamable compositions are applied using spray foam equipment. The spray foam equipment includes separate containers for each of the first and second parts. The containers are in fluid connection with a separate conduit, which each are in fluid communication with a mixing chamber which in turn is in fluid communication with a nozzle. Upon opening the containers (via the opening of a suitable valve in each of the containers), the two parts are pneumatically pumped from their containers into the respective conduits. The components of the two parts are then brought to the mixing chamber under pressure from an electric or hydraulic pump, and combined in a mixing device to form a reaction mixture. The mixing device may be a static mixer, a mix chamber, or other mix head. The reaction mixture is then expelled through a nozzle or other orifice. The expelled reaction mixture typically forms a spray which is directed to a mold or other surface upon which the multifunctional acetoacetate based foam is to be applied. The expelled reaction mixture typically forms a spray or a foam bead, depending in part on the nozzle size and type and the viscosity of the exiting material, which is directed to a mold or other surface upon which the foam is to be applied. The reaction mixture is then cured in situ and foam product is obtained by reacting the reaction mixture of the foamable composition. Examples of devices include electric pump and proportioner, hydraulic pump and proportioner and air purge spray gun.

The cured foam product

The cured foam product according to the present invention exhibited a pot life of at least 30 seconds, preferably at least 80 seconds, determined as the time to reach a tack free state of the foam surface after mixing the components of the foamable composition.

The cured foam product according to the present invention also exhibited a density of at least 0.1 g/cm$^3$ and preferably from 0.1 to 0.3 g/cm$^3$.

The cured foam product according to the present invention also exhibited a volume increase ratio of at least 300%, and preferably at least 600%.

The cured foam product according to the present invention may be a soft, medium soft or hard foam.

Therefore, the present foamable compositions are suitable for being used as structural foam and useful in a variety of sealing and insulation applications. These include, for example, building insulation such as for walls, foundations, floors and roofs; gap and crack filling and crack repair applications in buildings, masonry and other structures; vehicular cavity-filling applications, and the like. The foams are also useful in producing boardstock insulation and/or construction materials by spraying or applying the uncured foam onto a facing material (such as, for example, a fiber layer, a wood or metal layer, and the like). The foam compositions may be injected for use in low temperature applications (e.g., refrigerators, freezers).

Various features and embodiments of the disclosure are described in the following examples, which are intended to be representative and not limiting.

## Example

### Materials

AATMP is trimethylolpropane triacetoacetate obtained as Lonzamon from Arxada.

Jeffamine D-2000 is a polyoxypropylene diamine having a number average molecular weight of about 2000 g/mol from Huntsmann.

Jeffamine D-400 is a polyoxypropylene diamine having a number average molecular weight of about 400 g/mol from Huntsmann.

Jeffamine T-403 is a polyoxypropylene triamine having a number average molecular weight of about 440 from Huntsmann.

Priamine 1071 is a dimer fatty acid diamine from Croda.

Dytek DCH-99 is 1 ,2-diaminocyclohexane from Invista Arpadis.

1-Phenylethylamine was obtained from BASF.

Glacial acetic acid was obtained from Sigma-Aldrich.

Sodium bicarbonate was obtained from Merck.

Isatoic anhydride was obtained from Thermo Fisher Scientific.

Aerosil R202 is a hydrophobic fumed silica from Evonik.

## Test methods

Pot life

Pot life was defined as the time it took after mixing the components of the foamable composition until the surface of the foam was mostly tack free. The tack free state was tested by lightly tapping the foam surface with a metal spatula. When the foam surface could be tapped without leaving any residue on the spatula, the time was recorded.

Density

Density was measured using the Archimedes principle. A prepared sample of foam was first weighted on a scale. Then the same sample was submerged in a beaker filled with water on a scale using a set of pincers to measure the buoyancy. The buoyant force is equal to the weight of displaced water. Density of the foam is then calculated using the formula:

$$\rho_{foam} = m_{foam} / m_{displaced\ water} \times \rho_{Water}$$

Volume increase ratio

The increase in volume was calculated from the density of the sample before and after foaming. The density before foaming was calculated using the average density of all raw materials in the formulation. The density after foaming was measured using the above method. The volume increase is then calculated by diving the density after foaming by the initial density.

Toughness

Toughness was determined based on the force it took to deform a cured foam sample. It will be evaluated as hard if the sample cannot be deformed by hand. It will be evaluated as medium if the sample can be deformed by hand using strong force. It will be evaluated as soft if the sample can be easily deformed by hand. It will be evaluated as brittle if the sample breaks easily rather than being deformed.

Shrinkage

The shrinkage of the foam was observed whether the foam sample would detach from the polyethylene cup used as container for curing and foaming. If a significant gap was observed between the cured foam and the inner walls of the PE cup, the foam would be evaluated to have shrinkage.

Example 1

8.814 g AATMP, 1.15 g $NaHCO_3$, 0.2 g water and 0.4 g Aerosil R202 as part A were weighted into a polypropylene speedmixer cup. 3.93 g Jeffamine D-400, 2.15 g Dytek DCH-99, 1.33 g 1-phenylethylamine and 0.80 g Priamine 1071-LQ, 0.824 g glacial acetic acid and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.16. The test results are shown in Table 1.

Example 2

7.99 g AATMP, 2.08 g $NaHCO_3$, 0.2 g water and 0.4 g Aerosil R202 as part A were weighted into a polypropylene speedmixer cup. 3.56 g Jeffamine D-400, 1.95 g Dytek DCH-99, 1.20 g 1-phenylethylamine and 0.73 g Priamine 1071-LQ, 1.49 g glacial acetic acid and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.16. The test

results are shown in Table 1.

Example 3

6.64 g AATMP, 2 g isatoic anhydride, 0.6 g water and 0.4 g Aerosil R202 as part A were weighted into a polypropylene speedmixer cup. 9.576 g Jeffamine T-403, 0.386 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.062. The test results are shown in Table 1.

Example 4

6.69 g AATMP, 2 g isatoic anhydride, 0.6 g water and 0.4 g Aerosil R202 as part A were weighted into a polypropylene speedmixer cup. 9.13 g Jeffamine T-403, 0.778 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.124. The test results are shown in Table 1.

Example 5

6.75 g AATMP, 2 g isatoic anhydride, 0.6 g water and 0.4 g Aerosil R202 as part A were weighted into a polypropylene speedmixer cup. 8.68 g Jeffamine T-403, 1.17 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.185. The test results are shown in Table 1.

Example 6

6.80 g AATMP, 2 g isatoic anhydride, 0.6 g water and 0.4 g Aerosil R202 as part A were weighted into a polypropylene speedmixer cup. 8.22 g Jeffamine T-403, 1.58 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.232. The test results are shown in Table 1.

Example 7

5.60 g AATMP, 2 g isatoic anhydride, 0.6 g water and 0.4 g Aerosil R202 as part A were weighted into a polypropylene speedmixer cup. 7.92 g Jeffamine T-403, 2.74 g Jeffamine D-2000, 0.338 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.064. The test results are shown in Table 1.

Example 8

5.68 g AATMP, 2 g isatoic anhydride, 0.6 g water and 0.4 g Aerosil R202 as part A were weighted into a polypropylene speedmixer cup. 7.12 g Jeffamine T-403, 2.78 g Jeffamine D-2000, 1.024 g 1-phenylethylamine and 0.4 g Aerosil R202 as part B were weighted into a different polypropylene speedmixer cup. Both parts were homogenized in a

speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.192. The test results are shown in Table 1.

Example 9

4.79 g AATMP, 2 g isatoic anhydride, 0.6 g water and 0.4 g Aerosil R202 as part A were weighted into a polypropylene speedmixer cup. 6.64 g Jeffamine T-403, 4.87 g Jeffamine D-2000, 0.30 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.066. The test results are shown in Table 1.

Example 10

6.53 g AATMP, 2 g isatoic anhydride, 0.6 g water and 0.4 g Aerosil R202 as part A were weighted into a polypropylene speedmixer cup. 8.96 g Jeffamine T-403, 0.72 g Jeffamine D-400, 0.382 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.062. The test results are shown in Table 1.

Comparative Example 1

6.82 g AATMP, 1.72 g isatoic anhydride, 0.6 g water and 0.4 g Aerosil R202 as part A were weighted into a polypropylene speedmixer cup. 10.0 g Jeffamine T-403 and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. 1-phenylethylamine is not contained in the foamable composition. The test results are shown in Table 1.

Comparative Example 2

6.9 g AATMP, 2 g isatoic anhydride, 0.6 g water and 0.4 g Aerosil R202 as part A were weighted into a polypropylene speedmixer cup. 7.29 g Jeffamine T-403, 2.4 g 1-phenylethylamine and 0.4 g Aerosil R202 as part B were weighted into a different polypropylene speedmixer cup. Both parts were homogenized in a speedmixer at 3500 rpm for 1 minute to obtain a two-part foamable composition. After mixing, both parts were combined in a single polypropylene speedmixer cup and then were mixed in a speedmixer at 3500 rpm at 25°C for 15 seconds. Curing and foaming of the reaction mixture started instantaneously at 25°C and a foam product was obtained. The molar equivalent ratio of 1-phenylethylamine to AATMP in the foamable composition is 0.369. The test results are shown in Table 1.

Table 1. Testing results

| | Ex. 1 | Ex. 2 | Ex. 3 | Ex. 4 | Ex. 5 | Ex. 6 |
|---|---|---|---|---|---|---|
| Pot life (seconds) | 30 | 30 | 90 | 85 | 90 | 88 |
| Density (g/cm$^3$) | 0.19 | 0.18 | 0.12 | 0.14 | 0.14 | 0.15 |
| Volume increase (%) | 538 | 572 | 817 | 692 | 701 | 672 |
| Toughness | Hard | Hard | Hard | Hard | Hard | Hard |
| Shrinkage | No | No | No | No | No | No |

(continued)

| | Ex. 7 | Ex. 8 | Ex. 9 | Ex. 10 | Com. Ex. 1 | Com. Ex. 2 |
|---|---|---|---|---|---|---|
| Pot life (seconds) | 190 | 360 | 480 | 150 | 80 | 95 |
| Density (g/cm$^3$) | 0.19 | 0.26 | 0.22 | 0.13 | 0.21 | - |
| Volume increase (%) | 532 | 386 | 451 | 772 | 474 | - |
| Toughness | Medium | Medium | Soft | Hard | Hard | Brittle |
| Shrinkage | No | No | No | No | Yes | No |

It is evident from Table 1 that the inventive examples exhibited excellent foaming properties such as pot life, density, volume increase ratio, toughness and shrinkage. However, Comparative Example 1 containing no monofunctional primary amine exhibited a high shrinkage after foaming. Comparative Example 2 containing a higher amount of monofunctional primary amine obtained a brittle foam product.

## Claims

**1.** A foamable composition, comprising:

a multifunctional acetoacetate compound,
a polyether polyamine,
a monofunctional primary amine, and
a chemical blowing agent,

wherein the molar equivalent ratio of the monofunctional primary amine to the multifunctional acetoacetate compound is no more than 0.35.

**2.** The foamable composition according to claim 1, wherein the multifunctional acetoacetate compound has at least two acetoacetoxy groups, preferably 2 to 10 acetoacetoxy groups, and more preferably 3 to 4 acetoacetoxy groups.

**3.** The foamable composition according to claim 1 or 2, wherein the multifunctional acetoacetate compound is an acetoacetylated polyol obtained from glycerol, trimethylolpropane, ethanol isosorbide, neopentylglycol, pentaerythritol, di-methylolpropane, di-pentaerythritol, propoxylated monosaccharides or trimethylol ethane.

**4.** The foamable composition according to any of claims 1 to 3, wherein the polyether polyamine has oxyalkylene unit selected from oxyethylene, oxypropylene, oxytetramethylene and combination thereof, and preferably has oxypropylene units, and more preferably are polyoxypropylene diamine or polyoxypropylene triamine.

**5.** The foamable composition according to claim 4, wherein the polyoxypropylene diamine is represented by formula (3),

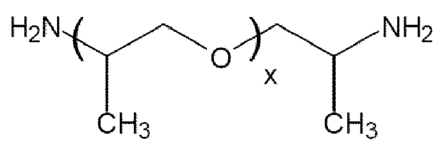

(3),

wherein x is from 2 to 100, preferably from 2 to 80.

**6.** The foamable composition according to claim 4, wherein the polyoxypropylene triamine is represented by formula (4)

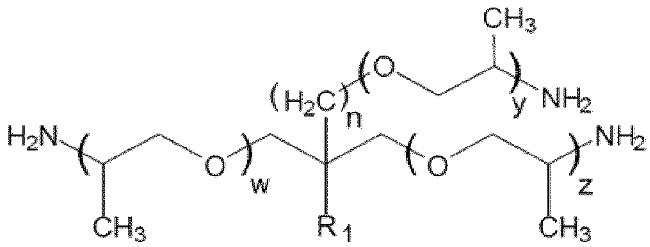

(4)

wherein n is from 0 to 6, w, y and z are each independently from 1 to 100, and more preferably from 1 to 80, the sum of w, y and z is from 3 to 100, and preferably from 5 to 85, $R_1$ is hydrogen or a linear or branched $C_1$ to $C_{16}$ alkyl group, and preferably is hydrogen or a linear or branched $C_1$ to $C_8$ alkyl group.

**7.** The foamable composition according to any of claims 1 to 6, wherein the chemical blowing agent is selected from organic acids, organic acid anhydrides, alkali metal bicarbonates, and combination thereof, and preferably is the combination of organic acids and alkali metal bicarbonates, or organic acid anhydrides only.

**8.** The foamable composition according to any of claims 1 to 7, wherein the organic acid is a monocarboxylic acid, and is preferably selected from formic acid, acetic acid, propionic acid, butyric acid, valeric acid, hexanoic acid, heptanoic acid, caprylic acid, nonanoic acid, decanoic acid, undecylenic acid, lauric acid, tridecylic acid, myristic acid, pentadecanoic acid, palmitic acid, phenylacetic acid, 2-phenylpropionic acid, triphenylacetic acid, mandelic acid, hydrocinnamic acid, o-, p-, m-tolylacetic acid, 4-hydroxyphenyl acetic acid, benzoic acid, aminobenzoic acid, toluic acid, dimethylbenzoic acid, dichlorophenylacetic acid, naphthoic acid, salicylic acid, and preferably is acetic acid.

**9.** The foamable composition according to any of claims 1 to 8, wherein the organic acid anhydride is N-carboxyanhydride of ortho-amino aromatic carboxylic acid, and preferably is isatoic anhydride.

**10.** The foamable composition according to any of claims 1 to 9, wherein the monofunctional primary amine is a monofunctional primary alkyl amine or a monofunctional primary aromatic amine, and preferably selected from methylamine, ethylamine, propylamine, butylamine, pentylamine, hexylamine, heptylamine, isopropylamine, isobutylamine, t-butylamine, 2-pentylamine, neo-pentylamine, phenylamine, naphthylamine, biphenylamine, anthracenylamine, 3-methyl-phenylamine, 4-methyl-naphthylamine, 2-methyl-biphenylamine, 9-methyl-anthracenylamine, phenylmethylamine, phenylethylamine, phenylpropylamine, phenylbutylamine, naphthylmethylamine, naphthylethylamine, biphenylmethylamine, 3-methyl-phenylmethylamine, phenyl isopropylamine, naphthylisopropylamine, naphthylisobutylamine, biphenylisopropylamine, and combination thereof, and more preferably is phenylethylamine.

**11.** The foamable composition according to any of claims 1 to 10, comprising at least one additive selected from plasticizer, catalyst, pigments, co-blowing agents, cell stabilizers, preservatives, antioxidants, reinforcing agents, antistatic agents, and combination thereof.

**12.** The foamable composition according to any of claims 1 to 11, wherein the composition is able to foam and cure at 25 °C.

**13.** A two-part foamable composition, comprising,

a first part comprising a multifunctional acetoacetate compound and a chemical blowing agent, and
a second part comprising a polyether polyamine, and a monofunctional primary amine,

wherein the molar equivalent ratio of the monofunctional primary amine to the multifunctional acetoacetate compound is no more than 0.35.

**14.** Foam product obtained by reacting the foamable composition according to any of claims 1 to 12 or the two-part foamable composition according to claim 13.

**15.** The use of the foamable composition according to any one of claims 1 to 12 or the two-part foamable composition according to claim 12 or the foam according to claim 13 as structural foam or in sealing and insulation applications.

Europäisches Patentamt
European Patent Office
Office européen des brevets

# EUROPEAN SEARCH REPORT

Application Number
EP 24 19 0549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 907 264 A1 (HENKEL AG & CO KGAA [DE]) 10 November 2021 (2021-11-10) * paragraph [0081]; claim 1; examples 1-5 * * paragraphs [0054] - [0062] * ----- | 1-15 | INV. C08J9/02 C08J9/08 C08G73/02 |
| A | EP 3 154 929 B1 (FIRESTONE BUILDING PROD CO LLC [US]) 16 September 2020 (2020-09-16) * paragraph [0072]; claim 1; examples 1-3; tables 1-2 * ----- | 1-15 | |

TECHNICAL FIELDS SEARCHED (IPC)

C08J
C09J
C08G

The present search report has been drawn up for all claims

2

| Place of search | Date of completion of the search | Examiner |
|---|---|---|
| The Hague | 19 December 2024 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 19 0549

This annex lists the patent family members relating to the patent documents cited in the above-mentioned European search report. The members are as contained in the European Patent Office EDP file on
The European Patent Office is in no way liable for these particulars which are merely given for the purpose of information.

19-12-2024

| Patent document cited in search report | Publication date | Patent family member(s) | Publication date |
|---|---|---|---|
| EP 3907264 A1 | 10-11-2021 | BR 112022022308 A2 | 20-12-2022 |
| | | CA 3182332 A1 | 11-11-2021 |
| | | CN 115551964 A | 30-12-2022 |
| | | DK 3907264 T3 | 21-11-2022 |
| | | EP 3907264 A1 | 10-11-2021 |
| | | ES 2929410 T3 | 29-11-2022 |
| | | JP 2023524734 A | 13-06-2023 |
| | | KR 20230005856 A | 10-01-2023 |
| | | US 2023102757 A1 | 30-03-2023 |
| | | WO 2021223991 A1 | 11-11-2021 |
| EP 3154929 B1 | 16-09-2020 | CA 2946714 A1 | 29-10-2015 |
| | | CA 3207515 A1 | 29-10-2015 |
| | | CN 106715383 A | 24-05-2017 |
| | | EP 3154929 A1 | 19-04-2017 |
| | | EP 3783048 A1 | 24-02-2021 |
| | | US 2015299383 A1 | 22-10-2015 |
| | | US 2016272754 A1 | 22-09-2016 |
| | | US 2018305493 A1 | 25-10-2018 |
| | | US 2020299456 A1 | 24-09-2020 |
| | | US 2023097878 A1 | 30-03-2023 |
| | | WO 2015164408 A1 | 29-10-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080132596 A
- EP 3154929 B1


### Non-patent literature cited in the description


- **WITZMAN et al.** Comparison of Methods for the Preparation of Acetoacetylated Coating Resins. *Journal of Coatings Technology*, October 1990, vol. 62 (789)
- **WITZEMAN et al.** Transacetoacetylation with tert-butyl acetoacetate: Synthetic Applications. *J. Org. Chemistry*, 1991, vol. 56, 1713-1718